# EUROPEAN PATENT SPECIFICATION

(11) **EP 2 858 301 B1**
(45) Date of publication and mention of the grant of the patent: **19.12.2018**
(21) Application number: 13837182.8
(22) Date of filing: 13.09.2013
(51) Int. Cl.: H04L 12/24, H04L 12/26

(54) **EVENT REPORTING METHOD AND SYSTEM**
EREIGNISBERICHTSVERFAHREN UND SYSTEM
SYSTÈME ET PROCÉDÉ POUR FAIRE RAPPORT D'ÉVÉNEMENT

(30) Priority: 13.09.2012 CN 201210338625
(43) Date of publication of application: 08.04.2015
(73) Proprietor: Huawei Device Co., Ltd., Longgang District Shenzhen Guangdong 518129 (CN)
(72) Inventor: LI, Na, Shenzhen Guangdong 518129 (CN); XUE, Guodong, Shenzhen Guangdong 518129 (CN)
(74) Representative: Pfenning, Meinig & Partner mbB
(86) International application number: PCT/CN2013/083433
(87) International publication number: WO 2014/040556

(56) References cited:
- WO-A1-2011/157055
- WO-A1-2013/154576
- WO-A2-2011/084011
- WO-A2-2011/157189
- CN-A- 1 984 008
- CN-A- 101 321 086
- 3GPP: "3rdGeneration Partnership Project; Technical Specification Group Services and System Aspects; System Improvements for Machine-Type Communications (Release 11)", 3GPP TR 23.888 V1.6.1, 1 February 2012 (2012-02-01), XP055166919,

## Description

### TECHNICAL FIELD

The present invention relates to the field of communications technologies, and in particular, to an event reporting method and system.

### BACKGROUND

Machine to machine (Machine to Machine, M2M), also referred to as machine type communications (Machine Type Communications, MTC), is a generic term of a series of technologies and a combination of technologies that implement data communications and interaction between machines and between a man and a machine by using a communications network.

In the MTC, an MTC device is a terminal device dedicated to machine type communications in the communications network, such as a remote meter reading device or a video surveillance device. An MTC server refers to a device that communicates with the MTC device by using the communications network, such as a server of an intelligent meter reading system or a server of an intelligent public transit system.

An MTC event reporting method is provided in the prior art, where the method includes the following steps: (1) a network server configures a threshold value for triggering MTC event reporting; (2) the network server monitors an MTC event of an MTC device; and (3) when the monitored MTC event reaches the threshold value, the network server reports the MTC event to the MTC server.

The prior art gives only a general description about an MTC event reporting process, and gives no specific description about how to report or a manner to be used for reporting. In addition, an existing entire MTC event reporting process (including configuration, monitoring, and reporting) is entirely completed by the network server, which leads to overburden of the network server,
WO 2011/0840111 A2 relates to a mobile communication system and method for monitoring of an event of a machine type communication (MTC) service in a mobile communication system. In the method for performing MTC monitoring, when one or a plurality of particular events occur, the occurred events are detected, and when information regarding a corresponding MTC device of the detected event is transmitted to a network entity, the network entity checks stored information regarding the corresponding MTC device, compares the checked information and information regarding the corresponding MTC device of the event, and provides the comparison information or the event related information to a server that manages and maintains the MTC device.
WO 2013/154576 A1, state of the art pursuant to article 54(3) EPC, discusses that communication systems, including cellular networks, and the devices that are connected to them, can have both legitimate and illegitimate uses and proposes a method for monitoring suspicious events. The method can include receiving a monitoring request regarding a user equipment or a category of devices. The method can also include performing a monitoring activity regarding the user equipment or the category of devices with respect to at least one suspicious event. The method can further include responding to the monitoring request indicating whether monitoring will be performed for the user equipment or the category of devices.
EP 2582171 A1 relates to a method and device for machine type communication (MTC) monitoring process, and includes: an MTC determines the first location which an MTC device (MD) is allowed to be at and the event report needing to be performed when the MD is not at the first location, the MTC server sends the information of the first location and the information of the event report to the MD; the MD receives the information of the first location and the information of the event report sent from the MTC server; and after detecting that the MD is not at the first location according to the information of the first information, the MD reports the event report to the MTC server.

### SUMMARY

Embodiments of the present invention provide an event reporting method to solve overburden of a network server in an event reporting process in the prior art.

According to a first aspect, a machine type communications, MTC, event reporting method at a terminal is provided, where the method includes:
configuring, for the terminal, a reporting condition for a monitored MTC event,
reporting, by the terminal, information about a monitored MTC event meeting the reporting condition to a core network management control network element, so that the core network management control network clement reports the information to a server, where
the information about the MTC event includes indication information of the monitored MTC event or status information of the monitored event or both wherein the monitored MTC event is monitoring on the amount of electricity of the terminal and the reporting, by the terminal, the information about the monitored MTC event to the core network management control network element by sending a non-access stratum NAS message, where the NAS message includes the information about the MTC event; or
reporting, by the terminal, the information about the monitored MTC event to the core network management control network element by sending a location area update LAU message, a routing area update RAU message, or a tracking area update TAU message, where the LAU message, the RAU message or the TAU message includes the information about the MTC event.

In a first possible implementation manner of the first aspect, the reporting condition includes triggering a reporting threshold value of the MTC event or reaching a reporting period of the MTC event.

With reference to the first aspect, in a second possible implementation manner, the reporting, by a terminal, information about a monitored MTC event to a core network management control network element, so that the core network management control network element reports the information to a server, includes:
reporting, by the terminal, the information about the monitored MTC event to the core network management control network element, so that the core network management control network element reports the information to the server by using a short message service-service center SMS-SC.

According to a second aspect, a machine type communications, MTC, event reporting method at a core network management control network element is provided, where the method includes:
receiving, by the core network management control network element, information about a monitored MTC event meeting a reporting condition, where the information is reported by a terminal that has a configured reporting condition for a monitored MTC event; and
reporting, by the core network management control network element, the information about the MTC event to a server, where
the information about the MTC event includes indication information of the monitored MTC event or status information of the monitored MTC event or both wherein the monitored MTC event is monitoring on the amount of electricity of the terminal.

The method further includes:
receiving, by the core network management control network element, the information about the monitored MTC event, where the information is reported by the terminal by sending a non-access stratum NAS message, the NAS message includes the information about the MTC event; or receiving, by the core network management control network element, the information, about the monitored MTC event, where the information is reported by the terminal by sending a location area update LAU message, a routing area update RAU message, or a tracking area update TAU message, where the LAU message, the RAU message or the TAU message includes the information about the MTC event.

With reference to the second aspect, in a first possible implementation manner, before the step of reporting, by the core network management control network element, the information about the MTC event to a server, the method further includes:
receiving subscription information sent by an HLR home location register or a home subscriber server HSS;
determining whether the received NAS message, LAU message, RAU message, TAU message includes the information about the monitored MTC event, and, if yes, determining whether the subscription information includes monitoring indication information or monitoring feature information or both, and, if yes, determining that the terminal has reporting permission; and
the reporting the information about the MTC event to a server specifically includes:
   reporting the information about the MTC event to the server when it is determined that the terminal has the reporting permission.

According to a third aspect, a terminal device is provided, where the terminal device includes:
a configuring unit, configured to configure a reporting condition for a monitored MTC event,
a reporting unit, configured to report information about a monitored MTC event meeting a configured reporting condition to a core network management control network element, so that the core network management control network element reports the information to a server, where
the information about the MTC event includes indication information of the monitored MTC event or status information of the monitored event or both wherein the monitored MTC event is monitoring on the amount of electricity of the terminal.

The reporting unit is specifically configured to: report the information about the monitored MTC event to the core network management control network element by sending a non-access stratum NAS message, so that the core network management control network element reports the information to the server, where the NAS message includes the information about the MTC event; or report the information about the monitored MTC event to the core network management control network element by sending a location area update LAU message, a routing area update RAU message, or a tracking area update TAU message, so that the core network management control network element reports the information to the server.

According to a fourth aspect, a core network management control network element is provided, where the core network management control network element includes:
an information receiving unit, configured to receive information about a monitored MTC event meeting a reporting condition, where the information is reported by a terminal that has a configured reporting condition for a monitored MTC event; and
an information reporting unit, configured to report the information about the MTC event to a server, where the information is received by the information receiving unit, where
the information about the MTC event includes indication information of the monitored MTC event or status information of the monitored MTC event or both wherein the monitored MTC event is monitoring on the amount of electricity of the terminal.

The information receiving unit is specifically configured to receive the information about the monitored MTC event, where the information is reported by the terminal by sending a non-access stratum NAS message, the NAS message includes the information about the MTC event; or receive the information about the monitored MTC event, where the information is reported by the terminal by sending a location area update LAU message, a routing area update RAU message, or a tracking area update TAU message, where the LAU message, the RAU message or the TAU message includes the information about the MTC event.

It can be learned from the foregoing technical solutions that in the embodiments of the present invention, information about a monitored event is directly reported to an event server by using a terminal instead of by using a network server, thereby reducing a burden of the network server.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a scenario of an event reporting system according to an embodiment of the present invention;
FIG. 2 is an implementation flowchart of an event reporting method according to another embodiment of the present invention;
FIG. 3 is an implementation flowchart of an event reporting method according to another embodiment of the present invention;
FIG. 4 is an interaction flowchart of an event reporting method according to another embodiment of the present invention;
FIG. 5 is an interaction flowchart of an event reporting method according to another embodiment of the present invention;
FIG. 6 is an interaction flowchart of an event reporting method according to another embodiment of the present invention;
FIG. 7 is a compositional structural diagram of a terminal device according to another embodiment of the present invention;
FIG. 8 is a compositional structural diagram of a terminal device according to another embodiment of the present invention;
FIG. 9 is a compositional structural diagram of a core network management control network element according to another embodiment of the present invention;
FIG. 10 is a compositional structural diagram of a core network management control network element according to another embodiment of the present invention;
FIG. 11 is a compositional structural diagram of a server according to another embodiment of the present invention; and
FIG. 12 is a compositional structural diagram of a server according to another embodiment of the present invention.

### DESCRIPTION OF EMBODIMENTS

In the following description, for a purpose of description instead of limitation, details such as a specific system structure, an interface and a technology are given to enable thorough understanding of the embodiments of the present invention. However, a person skilled in the art should understand that the present invention can still be implemented in other embodiments that lack such details. In other scenarios, detailed description of well-known apparatuses, circuits, and methods is omitted to prevent unnecessary details from hindering description of the present invention.

Technologies described in the embodiments of the present invention are applicable to various communications systems such as current 2G and 3G communications systems and next-generation communication systems, for example, a Global System for Mobile Communications (GSM), a Code Division Multiple Access (CDMA, Code Division Multiple Access) system, a Time Division Multiple Access (TDMA, Time Division Multiple Access) system, a Wideband Code Division Multiple Access (WCDMA, Wideband Code Division Multiple Access) system, a Frequency Division Multiple Access (FDMA) system, an Orthogonal Frequency-Division Multiple Access (OFDMA, Orthogonal Frequency-Division Multiple Access) system, a single carrier FDMA (SC-FDMA) system, a General Packet Radio Service (GPRS, General Packet Radio Service) system, a Long Term Evolution (LTE, Long Term Evolution) system, and other communications systems of this type.

In addition, in the embodiments of the present invention, the terms "system" and "network" are generally exchangeable in use in the specification. The term "and/or" in the embodiments of the present invention describes only an association relationship between associated objects, and represents that there may be three possible relationships. For example, A and/or B may represent the following three cases: there is A alone, there are both A and B, and there is B alone. In addition, the character "/" in the embodiments of the present invention generally refers to an "or" relationship between two associated objects.

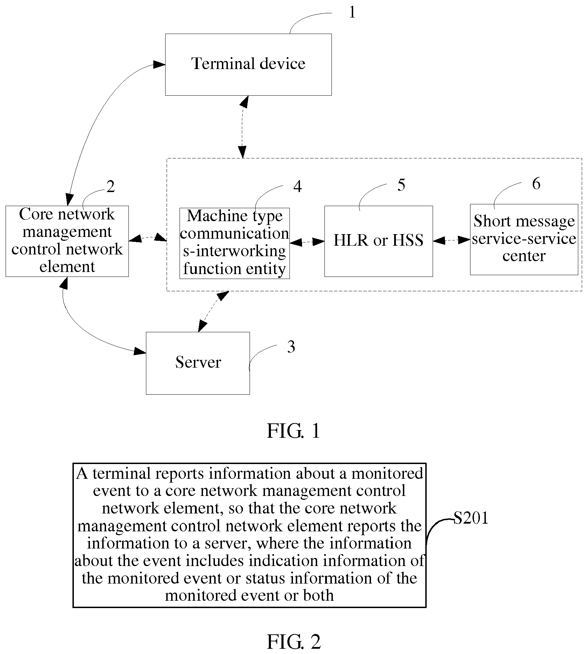

FIG. 1 shows a schematic diagram of a system scenario to which an event reporting method is applicable according to an embodiment of the present invention. For ease of description, only a part related to this embodiment is shown.

As shown in FIG. 1, the system includes a terminal device 1, a core network management control network element 2, and a server 3, where the terminal device 1, the core network management control network element 2, and the server 3 communicate by means of a network connection.

The terminal device 1 may be any terminal device that has a network access function, including but not limited to a mobile phone, a PAD (tablet computer), a notebook computer, and the like.

The core network management control network element 2 may be an SGSN (Serving GPRS Support Node, SGSN, that is, serving GPRS support node), a mobile switching center (Mobile Switching Center, MSC), or a mobility management entity (Mobility Management Entity, MME), or the like.

The server 3 may be a single server, or may be a server end including several function servers, where the server may be a service capability server (Service Capability Server, SCS) or an application server (Application Server, AS).

In this embodiment, the terminal device 1 reports information about a monitored event to the core network management control network element 2, so that the core network management control network element 2 reports the information to the server 3.

The information about the event includes indication information of the monitored event or status information of the monitored event or both.

Preferably, the monitored event and a reporting condition for the event are further configured for the terminal device 1. The terminal device 1 monitors the information about the event, and reports information about an event meeting the reporting condition to the server 3 by using the core network management control network element 2. The reporting condition for the event includes triggering a reporting threshold value of the event or reaching a reporting period of the event.

Preferably, the system further includes:
a machine type communications-interworking function (Machine Type Communications Inter-working Function, MTC-IWF entity) entity, configured to send subscription information related to the event monitored by the server to a home location register (Home Location Register, HLR) or a home subscriber server (Home Subscriber Server, HSS), receive a Report message sent by the core network management control network element 2, and send the Report message to the server after receiving the Report message, where the Report message includes indication information of the monitored event or status information of the monitored event or both; and
a home location register HLR or a home subscriber server HSS 5, configured to receive the subscription information sent by the MTC-IWF entity, allocate an MTC-IWF entity identifier to a terminal, and send the subscription information and the allocated MTC-IWF entity identifier to the core network management control network element 2.

Preferably, the information about the event in this embodiment may be sent by the terminal by using a procedure of a NAS message; or may be sent by the terminal by using a location area update (Location Area Update, LAU) request, a routing area update (Routing Area Update, RAU) request, or a tracking area update (Tracking Area Update, TAU) request.

Preferably, the system further includes:
a short message service-service center SMS-SC 6, configured to receive a short message service message sent by the core network management control network element 2, and send, after receiving the short message service message, a Message Delivery Report message to an MTC-IWF entity corresponding to the MTC-IWF entity identifier, where the Message Delivery Report message includes the indication information of the monitored event or the status information of the monitored event or both. The short message service message includes the indication information of the monitored event, the status information of the monitored event and/or the MTC-IWF entity identifier.

The system scenario provided in this embodiment is merely used to explain the present invention instead of limiting the protection scope of the present invention.

FIG. 2 shows an implementation procedure of the event reporting method according to Embodiment 1 of the present invention. This embodiment is executed by a terminal device 1 in FIG. 1. The process of the method is detailed below:

In step S201, a terminal reports information about a monitored event to a core network management control network element, so that the core network management control network element reports the information to a server.

In this embodiment, the information about the monitored event includes but is not limited to indication information of the monitored event or status information of the monitored event or both, and may further include identification information of the terminal and the like. The indication information of the monitored event may include but not be limited to indicating a type of the monitored event, for example, the monitored event is monitoring on the amount of electricity of the terminal. The status information of the monitored event may include a specific value of the event, status indication information of the event, priority or urgency of the event, and the like. For example, when the monitored event is the amount of electricity, the status information of the monitored event may be a specific value of the current amount of electricity (for example, the current amount of electricity is 10 kilowatt-hours or the current amount of remaining electricity is 10%, or the like), low electricity indication information and/or priority or urgency of monitoring the amount of electricity.

Preferably, before step S201, this embodiment further includes:
configuring, by the terminal, the monitored event and a reporting condition for the event.

In this embodiment, the reporting condition for the event includes but is not limited to triggering a reporting threshold value of the event or reaching a reporting period of the event.

Preferably, in the embodiment, manners of reporting the information about the event include but are not limited to any one of the following manners:
manner 1: reporting information about an event meeting the reporting condition to the server by using a procedure of a NAS message;
manner 2: reporting information about an event meeting the reporting condition to the server by using an LAU request or an RAU request or a TAU request; and
manner 3: reporting information about an event meeting the reporting condition to the server by using a short message service message.

In this embodiment, a monitored event and a reporting condition for the event are configured for a terminal, and the terminal monitors the monitored event, thereby reducing a burden of an existing network server. In addition, a status of the monitored event is reported by using a NAS message, or an LAU request or an RAU request or a TAU message, or a short message service message, or the like, so that no bearer connection needs to be created and efficiency of reporting events is effectively improved.

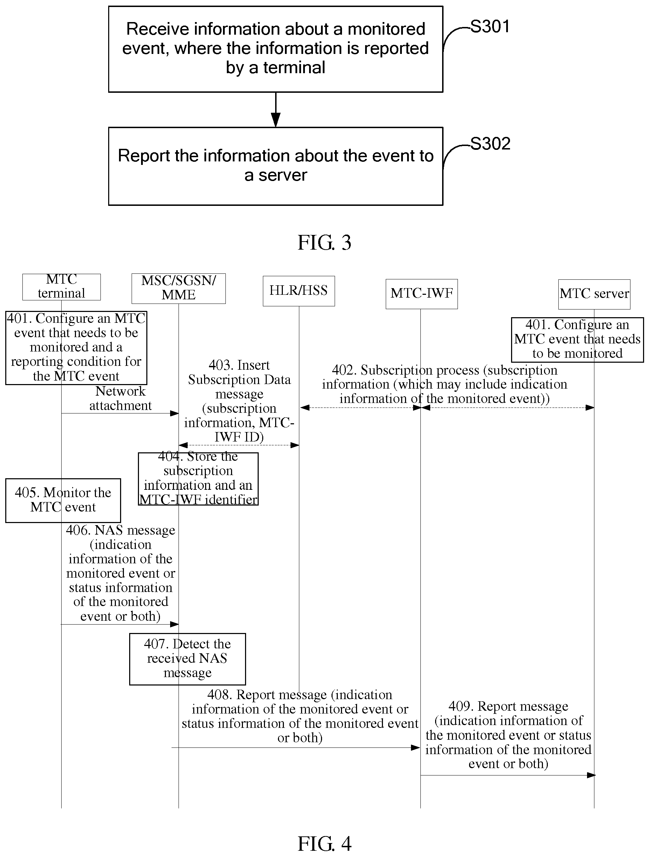

FIG. 3 shows an implementation procedure of the event reporting method according to Embodiment 1 of the present invention. This embodiment is executed by a core network management control network element 2 in FIG. 1. The process of the method is detailed below:

In step S301, receive information about a monitored event, where the information is reported by a terminal.

Preferably, the information about the event includes but is not limited to indication information of the monitored event or status information of the monitored event or both, and the receiving information about a monitored event, where the information is reported by a terminal, includes:
receiving information about a monitored event meeting a preset reporting condition, where the information is reported by the terminal, and the reporting condition includes triggering a reporting threshold value of the event or reaching a reporting period of the event.

The receiving information about a monitored event, where the information is reported by a terminal includes:
receiving the information about the monitored event, where the information is reported by using a procedure of a non-access stratum NAS message, the NAS message includes the information about the event, and the information about the event includes the indication information of the monitored event or the status information of the monitored event or both; or receiving the information about the monitored event, where the information is reported by the terminal by using a procedure of a location area update LAU message, a routing area update RAU message, or a tracking area update TAU message, where the LAU message, the RAU message or the TAU message includes the information about the event, and the information about the event includes the indication information of the monitored event or the status information of the monitored event or both; or
receiving, by the terminal, the information about the monitored event, where the information is reported by the terminal by using a short message service message, the short message service message includes the information about the event, and the information about the event includes the indication information of the monitored event, the status information of the monitored event and/or a machine type communications-interworking function (MTC-IWF) entity identifier.

In step S302, report the information about the event to a server.

Preferably, the reporting the information about the event to a server includes:
reporting the information about the event to an MTC-IWF entity, so that the MTC-IWF entity reports the information to the server; or
reporting the information about the event to a short message service-service center SMS-SC, so that the SMS-SC reports the information to the server by using an MTC-IWF entity corresponding to the MTC-IWF entity identifier.

In another embodiment of the present invention, before the step of reporting the information about the event to a server, the method further includes:
receiving subscription information sent by an HLR home location register or a home subscriber server HSS; and
determining whether the received NAS message, LAU message, RAU message, TAU message, or short message service message includes the information about the monitored event, and, if yes, determining whether the subscription information includes monitoring indication information or monitoring feature information or both, and, if yes, determining that the terminal has reporting permission, where the monitoring indication information is used to indicate that the terminal has the reporting permission.

The reporting the information about the event to a server specifically includes:
reporting the information about the event to the server when it is determined that the terminal has the reporting permission.

FIG. 4 shows an interaction procedure of an event reporting method according to another embodiment of the present invention. The process of the method is detailed below:
401. An MTC event that needs to be monitored and a reporting condition for the MTC event are configured for an MTC terminal; and the MTC event monitored by the MTC terminal is configured for an MTC server, where the reporting condition for the MTC event includes but is not limited to triggering a reporting threshold value of the MTC event or reaching a reporting period of the MTC event.
402. The MTC server, a machine type communications-interworking function MTC-IWF entity, and a home location register HLR or a home subscriber server HSS perform subscription, where a subscription process is specifically: the MTC server sends subscription information (which may include indication information of the monitored event) related to the monitored MTC event to the home location register HLR or the home subscriber server HSS by using the machine type communications-interworking function MTC-IWF entity, and after completion of the subscription, the MTC terminal is attached to a network.
403. The HLR or the HSS sends an Insert Subscription Data message to a serving GPRS support node SGSN, a mobile switching center MSC, or a mobility management entity MME, where the message includes the subscription information and an MTC-IWF entity identifier (MTC-IWF entity ID), and the MTC-IWF entity identifier is allocated by the HLR or the HSS.
404. The MSC, the SGSN, or the MME stores the subscription information and the MTC-IWF entity identifier (MTC-IWF entity ID).
405. The MTC terminal monitors information about the MTC event.
406. When a status of the MTC event reaches the reporting condition, the MTC terminal sends the information about the MTC event meeting the reporting condition to the MSC, the SGSN, or the MME by using a NAS message, where the NAS message may be a service request Service Request, an uplink NAS transport Uplink NAS Transport message, or an uplink generic NAS transport Uplink Generic NAS Transport message, and the NAS message may include indication information of the monitored event or status information of the monitored event or both.
407. The MSC, the SGSN, or the MME detects the received NAS message.
408. When the MSC, the SGSN, or the MME detects that the NAS message includes the information about the monitored MTC event, determines whether the terminal has reporting permission by determining whether the subscription information includes the indication information of the monitored event, and when the terminal has the reporting permission, sends a Report message to an MTC-IWF entity corresponding to the MTC-IWF entity identifier, where the Report message may include the indication information of the monitored event or the status information of the monitored event or both.
409. After receiving the Report message, the MTC-IWF entity sends the Report message to the MTC server, where the Report message includes the indication information of the monitored event or the status information of the monitored event or both.

An identifier of the MTC server may be pre-stored in the terminal, stored as the subscription information in the HSS or the HLR, or obtained in another existing manner. When the MTC terminal sends the NAS message and when the MSC, the SGSN, or the MME sends the Report message, the identifier of the MTC server may be carried, so that the MTC-IWF entity can send, according to the identifier of the MTC server, the Report message to the MTC server corresponding to the identifier of the MTC server.

Optionally, when the reporting condition for the MTC event does not reach the reporting period of the MTC event, a timer is used to perform timing before step 406 in this embodiment, and when the counted time reaches a preset time, steps 406-409 are performed.

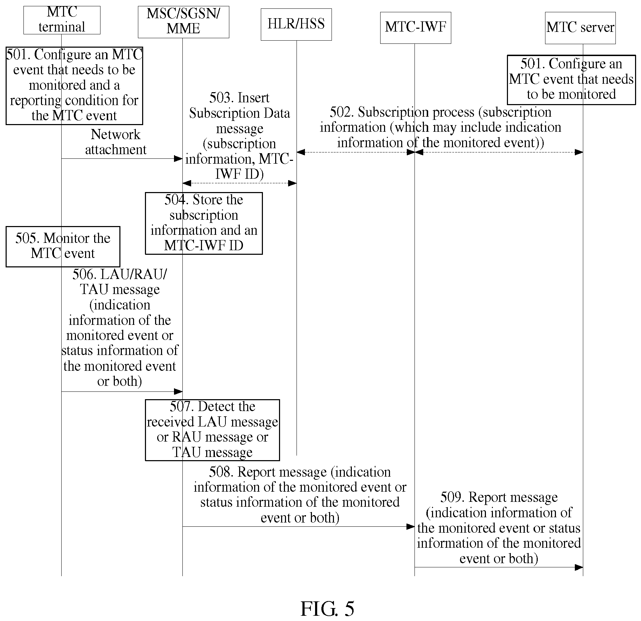

FIG. 5 shows an interaction procedure of an event reporting method according to another embodiment of the present invention. The process of the method is detailed below:
501. An MTC event that needs to be monitored and a reporting condition for the MTC event are configured for an MTC terminal; and the MTC event monitored by the MTC terminal is configured for an MTC server, where the reporting condition for the MTC event includes but is not limited to triggering a reporting threshold value of the MTC event or reaching a reporting period of the MTC event.
502. The MTC server, a machine type communications-interworking function MTC-IWF entity, and a home location register HLR or a home subscriber server HSS perform subscription, where a subscription process is specifically: the MTC server sends subscription information (which may include indication information of the monitored event) related to the monitored MTC event to the home location register HLR or the home subscriber server HSS by using the machine type communications-interworking function MTC-IWF entity, and after completion of the subscription, the MTC terminal is attached to a network.
503. The HLR or the HSS sends an Insert Subscription Data message to an MSC, an SGSN, or an MME, where the message includes the subscription information and an MTC-IWF entity identifier (MTC-IWF entity ID).
504. After receiving the Insert Subscription Data message, the MSC, the SGSN, or the MME stores the subscription information and the MTC-IWF entity identifier that are in the Insert Subscription Data message.
505. The MTC terminal monitors information about the MTC event.
506. When a status of the MTC event reaches the reporting condition, the MTC terminal sends information about the event meeting the reporting condition to the MSC, the SGSN, or the MME by using an LAU message/RAU message/TAU message, where the LAU message or the RAU message or the TAU message includes the indication information of the monitored event or status information of the monitored event or both.
507. The MSC, the SGSN, or the MME detects the received LAU message, RAU message, or TAU message.
508. When the MSC, the SGSN, or the MME detects that the LAU message, the RAU message, or the TAU message includes the information about the monitored MTC event, determines whether the terminal has reporting permission by determining whether the subscription information includes the indication information of the monitored event, and when the terminal has the reporting permission, sends a Report message to an MTC-IWF entity corresponding to the MTC-IWF entity identifier, where the Report message includes the indication information of the monitored event or the status information of the monitored event or both.
509. After receiving the Report message, the MTC-IWF entity sends the Report message to the MTC server, where the Report message includes the indication information of the monitored event or the status information of the monitored event or both.

Optionally, when the reporting condition for the MTC event does not reach the reporting period of the MTC event, a timer is used to perform timing before step 506 in this embodiment, and, when the counted time reaches a preset time, steps 506-509 are performed.

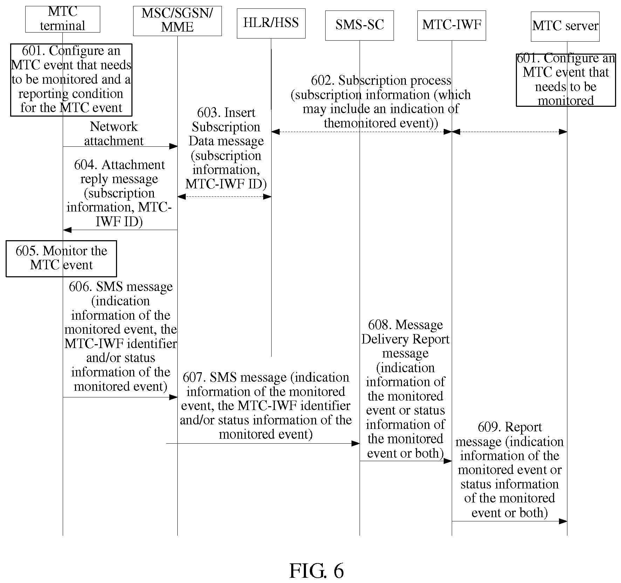

FIG. 6 shows an interaction procedure of an event reporting method according to another embodiment of the present invention. The process of the method is detailed below:
601. An MTC event that needs to be monitored and a reporting condition for the MTC event are configured for an MTC terminal; and the MTC event monitored by the MTC terminal is configured for an MTC server, where the reporting condition for the MTC event includes but is not limited to triggering a reporting threshold value of the MTC event or reaching a reporting period of the MTC event.
602. The MTC server, a machine type communications-interworking function MTC-IWF entity, and a home location register HLR or a home subscriber server HSS perform subscription, where a subscription process is specifically: the MTC server sends subscription information (which may include indication information of the monitored MTC event) related to the monitored MTC event to the home location register HLR or the home subscriber server HSS by using the machine type communications-interworking function MTC-IWF entity, and after completion of the subscription, the MTC terminal is attached to a network.
603. The HLR or the HSS sends an Insert Subscription Data message to an MSC, or an SGSN, an MME, where the message includes the subscription information and an MTC-IWF entity identifier.
604. After receiving the Insert Subscription Data message, the MSC, the SGSN, or the MME stores the subscription information and the MTC-IWF entity identifier that are in the Insert Subscription Data message, and sends to the MTC terminal the subscription information and the MTC-IWF entity identifier along with an attachment reply message, which is sent to the MTC terminal.
605. The MTC terminal monitors information about the MTC event.
606. When a status of the MTC event reaches the reporting condition, the MTC terminal sends the information about the MTC event meeting the reporting condition to the MSC, the SGSN, or the MME by using a short message service message, where the short message service message includes the indication information of the monitored event, the MTC-IWF entity identifier and/or status information of the monitored event.
607. The MSC, the SGSN, or the MME detects the received short message service message, and when the short message service message includes the information about the monitored MTC event, determines whether the terminal has reporting permission by determining whether the subscription information includes the indication information of the monitored event, and when the terminal has the reporting permission, sends the short message service message to an SMS-SC.
608. After receiving the short message service message, the SMS-SC sends a Message Delivery Report message to an MTC-IWF entity corresponding to the MTC-IWF entity identifier, where the Message Delivery Report message includes the indication information of the monitored event or the status information of the monitored event or both.
609. After receiving the Message Delivery Report message, the MTC-IWF entity sends a Report message to the MTC server, where the Report message includes the indication information of the monitored event or the status information of the monitored event or both.
Optionally, when the reporting condition for the MTC event does not reach the reporting period of the MTC event, a timer is used to perform timing before step 606 in this embodiment, and, when the counted time reaches a preset time, steps 606-609 are performed.

It should be noted that a dashed line in FIG. 4 to FIG. 6 denotes an interaction process between two functional entities, and a solid line denotes directional transmission.

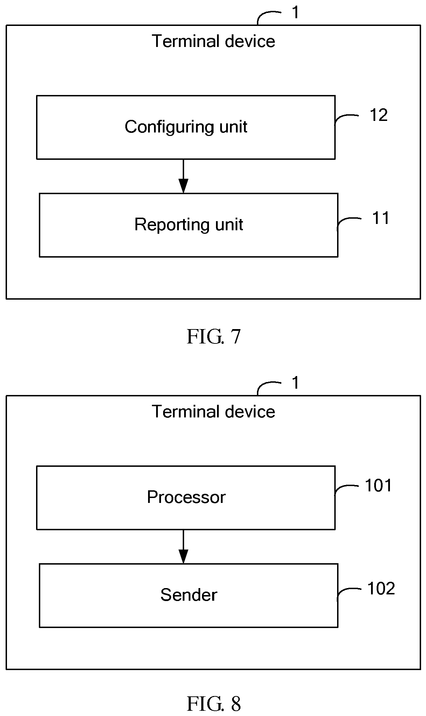

FIG. 7 shows a composition structure of a terminal device 1 according to another embodiment of the present invention. For ease of description, only a part related to this embodiment of the present invention is shown.

The terminal device 1 includes a reporting unit 11. Specific functions of each unit are as follows:
a reporting unit 11 is configured to report information about a monitored event to a core network management control network element, so that the core network management control network element reports the information to a server, where
the information about the event includes indication information of the monitored event or status information of the monitored event or both.

Further, the terminal 1 further includes:
a configuring unit 12, configured to configure the monitored event.

Further,
the configuring unit 12 is further configured to configure a reporting condition for the monitored event; and
the reporting unit 11 is specifically configured to monitor information about the event, and report information about an event meeting the reporting condition configured by the configuring unit 12 to the core network management control network element.

The reporting condition for the event includes triggering a reporting threshold value of the event or reaching a reporting period of the event.

Further, the reporting unit 11 is configured to report the information about the monitored event to the core network management control network element, so that the core network management control network element reports the information to the server, and the reporting unit 11 is specifically configured to report the information about the monitored event to the core network management control network element by using a procedure of a non-access stratum NAS message, so that the core network management control network element reports the information to the server, where the NAS message includes the information about the event, and the information about the event includes the indication information of the monitored event or the status information of the monitored event or both; or report the information about the monitored event to the core network management control network element by using a procedure of a location area update LAU message, a routing area update RAU message, or a tracking area update TAU message, so that the core network management control network element reports the information to the server, where the LAU message, the RAU message or the TAU message includes the information about the event, and the information about the event includes the indication information of the monitored event or the status information of the monitored event or both.

The reporting unit 11 is configured to report the information about the monitored event to the core network management control network element, so that the core network management control network element reports the information to the server by using a short message service-service center SMS-SC, and the reporting unit 11 is specifically configured to report the information about the monitored event to the core network management control network element by using a short message service message, so that the core network management control network element reports the information to the server by using the short message service-service center SMS-SC, where the short message service message includes the information about the event, and the information about the event includes the indication information of the monitored event, the status information of the monitored event and/or an MTC-IWF entity identifier.

The terminal 1 provided in this embodiment can use a corresponding event reporting method described above. For details, refer to related descriptions in embodiments corresponding to FIG. 2, FIG. 4, FIG. 5, and FIG. 6 of the event reporting method, and no repeated description is given here.

FIG. 8 shows a composition structure of a terminal device 1 according to another embodiment of the present invention. For ease of description, only a part related to this embodiment of the present invention is shown.

The terminal device 1 includes a processor 101 and a sender 102, where the processor 101 is configured to report information about a monitored event to a core network management control network element by using the sender 102, so that the core network management control network element reports the information to a server.

The information about the event includes indication information of the monitored event or status information of the monitored event or both.

Further, the processor 101 is further configured to configure a monitored event and a reporting condition for the monitored event, where the reporting condition for the event includes triggering a reporting threshold value of the event or reaching a reporting period of the event.

The processor 101 is specifically configured to monitor information about the event, and report information about an event meeting the reporting condition to the core network management control network element by using the sender 102.

Further, the processor 101 is configured to report the information about the monitored event to the core network management control network element by using the sender 102, so that the core network management control network element reports the information to the server.

The processor 101 is specifically configured to report the information about the monitored event to the core network management control network element by using a procedure of a non-access stratum NAS message in the sender 102, so that the core network management control network element reports the information to the server, where the NAS message includes the information about the event, and the information about the event includes the indication information of the monitored event or the status information of the monitored event or both; or
the processor 101 is specifically configured to report the information about the monitored event to the core network management control network element by using a procedure of a location area update LAU message, a routing area update RAU message, or a tracking area update TAU message in the sender 102, so that the core network management control network element reports the information to the server, where the LAU message, the RAU message or the TAU message includes the information about the event, and the information about the event includes the indication information of the monitored event or the status information of the monitored event or both; or
the processor 101 is configured to report the information about the monitored event to the core network management control network element by using the sender 102, so that the core network management control network element reports the information to the server by using a short message service-service center SMS-SC, and the processor 101 is specifically configured to report the information about the monitored event to the core network management control network element by using a short message service message in the sender 102, so that the core network management control network element reports the information to the server by using the short message service-service center SMS-SC, where the short message service message includes the information about the event, and the information about the event includes the indication information of the monitored event, the status information of the monitored event and/or an MTC-IWF entity identifier.

The terminal 1 provided in this embodiment can use a corresponding event reporting method described above. For details, refer to related descriptions in embodiments corresponding to FIG. 2, FIG. 4, FIG. 5, and FIG. 6 of the event reporting method, and no repeated description is given here.

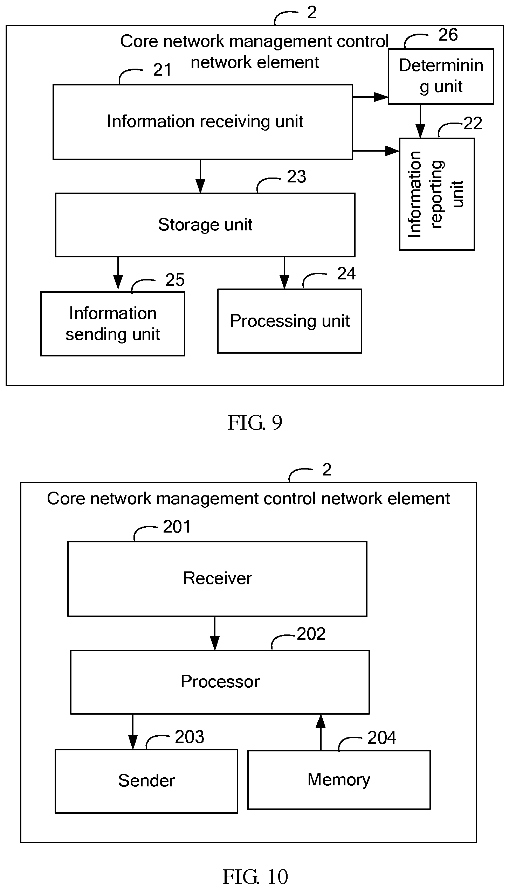

FIG. 9 shows a composition structure of a core network management control network element 2 according to another embodiment of the present invention. For ease of description, only a part related to the embodiment of the present invention is shown.

The core network management control network element 2 includes an information receiving unit 21 and an information reporting unit 22. Specific functions of each unit are as follows:
The information receiving unit 21 is configured to receive information about a monitored event, where the information is reported by a terminal.

The information reporting unit 22 is configured to report the information about the event to a server, where the information is received by the information receiving unit 21, where
the information about the event includes indication information of the monitored event or status information of the monitored event or both.

Further, the information receiving unit 21 is specifically configured to receive information about a monitored event meeting a preset reporting condition, where the information is reported by the terminal, and the reporting condition includes triggering a reporting threshold value of the event or reaching a reporting period of the event.

Further, the information receiving unit 21 is specifically configured to receive the information about the monitored event, where the information is reported by using a procedure of a non-access stratum NAS message, the NAS message includes the information about the event, and the information about the event includes the indication information of the monitored event or the status information of the monitored event or both; or receive the information about the monitored event, where the information is reported by the terminal by using a procedure of a location area update LAU message, a routing area update RAU message, or a tracking area update TAU message, where the LAU message, the RAU message or the TAU message includes the information about the event, and the information about the event includes the indication information of the monitored event or the status information of the monitored event or both.

The information reporting unit 22 is specifically configured to report the information about the event to an MTC-IWF entity, where the information is received by the information receiving unit, so that the MTC-IWF entity reports the information to the server.

Further,
the information receiving unit 21 is further configured to receive subscription information sent by an HLR home location register or a home subscriber server HSS; and
the core network management control network element 2 further includes:
a determining unit 26, configured to determine whether the received NAS message, LAU message, RAU message, TAU message, or short message service message includes the information about the monitored event, and, if yes, determine whether the subscription information includes monitoring indication information or monitoring feature information or both, and, if yes, determine that the terminal has reporting permission.

The information reporting unit 22 is specifically configured to report the information about the event to the server when the determining unit 26 determines that the terminal has the reporting permission, where the information is received by the information receiving unit 21.

The information receiving unit 21 is specifically configured to receive the information about the monitored event, where the information is reported by the terminal by using a short message service message, the short message service message includes the information about the event, and the information about the event includes the indication information of the monitored event, the status information of the monitored event and/or an MTC-IWF entity identifier.

The information reporting unit 22 is specifically configured to report the information about the event to a short message service-service center SMS-SC, where the information is received by the information receiving unit, so that the SMS-SC reports the information to the server.

The information reporting unit 22 is specifically configured to report the information about the event to the short message service-service center SMS-SC, where the information is received by the information receiving unit, so that the SMS-SC reports the information to the server by using an MTC-IWF entity corresponding to the MTC-IWF entity identifier.

The determining unit 26 is further configured to determine whether the short message service message received by the information receiving unit 21 includes the monitoring indication information, and, if yes, determine, according to the monitoring indication information, whether the terminal has the reporting permission.

The information reporting unit 22 is specifically configured to report the information about the event to the server when a determining result of the determining unit 26 is yes, where the information is received by the information receiving unit.

Further, the information receiving unit 21 is further configured to receive subscription information sent by an HLR home location register or a home subscriber server HSS, where the subscription information includes the monitoring indication information.

The core network management control network element further includes:
a storage unit 23, configured to store the subscription information received by the information receiving unit 21.

Further, the core network management control network element 2 further includes:
a processing unit 24, configured to receive information sent by the terminal and detect the information, and when detecting that the information includes the indication information of the monitored event, send a Report message to the MTC-IWF entity corresponding to the MTC-IWF entity identifier, where the Report message includes the indication information of the monitored event or the status information of the monitored event or both, so that the MTC-IWF entity sends the Report message to the server after receiving the Report message, where the Report message includes the indication information of the monitored event or the status information of the monitored event or both.

Further, the core network management control network element 2 includes:
an information sending unit 25, configured to send the indication information of the monitored event and/or the MTC-IWF entity identifier, which is stored by the storage unit 23, to the terminal.

The processing unit 24 is configured to receive a short message service message sent by the terminal, and send the short message service message to the SMS-SC, where the short message service message includes the indication information of the monitored event, the status information of the monitored event and/or the MTC-IWF entity identifier, so that the SMS-SC sends, after receiving the short message service message, a Message Delivery Report message to an MTC-IWF entity corresponding to the MTC-IWF entity identifier, where the Message Delivery Report message includes the indication information of the monitored event or the status information of the monitored event or both, and the MTC-IWF entity sends a Report message to the server after receiving the Message Delivery Report message, where the Report message includes the indication information of the monitored event or the status information of the monitored event or both.

In this embodiment, the core network management control network element is a serving GPRS support node SGSN, a mobile switching center MSC, or a mobility management entity MME.

The core network management control network element 2 provided in this embodiment can use a corresponding event reporting method described above. For details, refer to related descriptions in embodiments corresponding to FIG. 3, FIG. 4, FIG. 5, and FIG. 6 of the event reporting method, and no repeated description is given here.

FIG. 10 shows a composition structure of a core network management control network element according to another embodiment of the present invention. For ease of description, only a part related to this embodiment of the present invention is shown.

The core network management control network element 2 includes a receiver 201, a processor 202, and a sender 203, where:
the receiver 201 is configured to receive information about a monitored event, where the information is reported by a terminal; and
the processor 202 is configured to report the information about the event to the server by using the sender 203, where the information about the event is received by the receiver 201 and includes the indication information of the monitored event or the status information of the monitored event or both.

Further, the receiver 201 is specifically configured to receive information about a monitored event meeting a preset reporting condition, where the information is reported by the terminal, and the reporting condition includes triggering a reporting threshold value of the event or reaching a reporting period of the event.

Further, the receiver 201 is specifically configured to receive the information about the monitored event, where the information is reported by using a procedure of a non-access stratum NAS message, the NAS message includes the information about the event, and the information about the event includes the indication information of the monitored event or the status information of the monitored event or both; or receive the information about the monitored event, where the information is reported by the terminal by using a procedure of a location area update LAU message, a routing area update RAU message, or a tracking area update TAU message, where the LAU message, the RAU message or the TAU message includes the information about the event, and the information about the event includes the indication information of the monitored event or the status information of the monitored event or both.

The processor 202 is specifically configured to report the information about the event to an MTC-IWF entity by using the sender 203, where the information is received by the receiver 201, so that the MTC-IWF entity reports the information to the server.

Further,
the receiver 201 is further configured to receive subscription information sent by an HLR home location register or a home subscriber server HSS.

Further, the processor 202 is further configured to determine whether the received NAS message, LAU message, RAU message, TAU message, or short message service message includes the information about the monitored event, and, if yes, determine whether the subscription information includes monitoring indication information or monitoring feature information or both, and, if yes, determine that the terminal has reporting permission.

The processor 202 is specifically configured to: when it is determined that the terminal has the reporting permission, report the information about the event to the server by using the sender 203, where the information is received by the receiver 201.

The receiver 201 is specifically configured to receive the information about the monitored event, where the information is reported by the terminal by using a short message service message, the short message service message includes the information about the event, and the information about the event includes the indication information of the monitored event, the status information of the monitored event and/or an MTC-IWF entity identifier.

The processor 202 is specifically configured to report the information about the event to a short message service-service center SMS-SC by using the sender 203, where the information is received by the receiver 201, so that the SMS-SC reports the information to the server.

The processor 202 is specifically configured to report the information about the event to the short message service-service center SMS-SC by using the sender 203, where the information is received by the receiver 201, so that the SMS-SC reports the information to the server by using an MTC-IWF entity corresponding to the MTC-IWF entity identifier.

The processor 202 is further configured to determine whether the short message service message received by the receiver 201 includes the monitoring indication information, and, if yes, determine, according to the monitoring indication information, whether the terminal has the reporting permission.

The processor 202 is specifically configured to: when a result of the determining is yes, report the information about the event to the server by using the sender 203, where the information is received by the receiver 201.

Further, the receiver 201 is further configured to receive subscription information sent by an HLR home location register or a home subscriber server HSS, where the subscription information includes the monitoring indication information.

The core network management control network element 2 further includes:
a memory 204, configured to store the subscription information received by the receiver 201.

Further, the processor 202 is further configured to detect terminal information received by the receiver 201, and when detecting that the information includes the indication information of the monitored event, send a Report message to the MTC-IWF entity corresponding to the MTC-IWF entity identifier, where the Report message includes the indication information of the monitored event or the status information of the monitored event or both, so that the MTC-IWF entity sends the Report message to the server after receiving the Report message, where the Report message includes the indication information of the monitored event or the status information of the monitored event or both.

Further, the sender 203 is further configured to send the indication information of the monitored event or the MTC-IWF entity identifier or both, which is stored by the memory 24, to the terminal.

The processor 202 is further configured to send a short message service message to the SMS-SC by using the sender 203, where the short message service message is received by the receiver 201 and sent by the terminal and includes the indication information of the monitored event, the status information of the monitored event and/or the MTC-IWF entity identifier, so that the SMS-SC sends, after receiving the short message service message, a Message Delivery Report message to an MTC-IWF entity corresponding to the MTC-IWF entity identifier, where the Message Delivery Report message includes the indication information of the monitored event or the status information of the monitored event or both, and the MTC-IWF entity sends a Report message to the server after receiving the Message Delivery Report message, where the Report message includes the indication information of the monitored event or the status information of the monitored event or both.

In this embodiment, the core network management control network element is a serving GPRS support node SGSN, a mobile switching center MSC, or a mobility management entity MME.

The core network management control network element 2 provided in this embodiment can use a corresponding event reporting method described above. For details, refer to related descriptions in embodiments corresponding to FIG. 3, FIG. 4, FIG. 5, and FIG. 6 of the event reporting method, and no repeated description is given here.

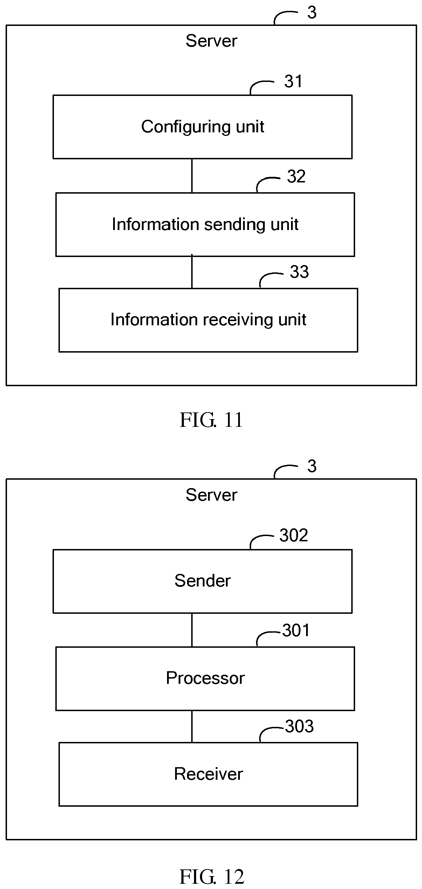

FIG. 11 shows a composition structure of a server according to another embodiment of the present invention. For ease of description, only a part related to this embodiment of the present invention is shown.

The server 3 includes a configuring unit 31, an information sending unit 32, and an information receiving unit 33. Specific functions of each unit are as follows:
the configuring unit 31 is configured to configure an event monitored by a terminal;
the information sending unit 32 is configured to send subscription information related to the monitored event to an MTC-IWF entity, so that the MTC-IWF entity sends the subscription information to an HLR or an HSS; and
the information receiving unit 33 is configured to receive a Report message sent by the MTC-IWF entity, where the Report message includes indication information of the monitored event or status information of the monitored event or both.

The server is a service capability server SCS or an application server AS.

The server 3 provided in this embodiment can use a corresponding event reporting method described above. For details, refer to related descriptions in embodiments corresponding to FIG. 4, FIG. 5, and FIG. 6 of the event reporting method, and no repeated description is given here.

FIG. 12 shows a composition structure of a server according to another embodiment of the present invention. For ease of description, only a part related to the embodiment of the present invention is shown.

The server 3 includes a processor 301, a sender 302, and a receiver 303, where:
the processor 301 is configured to configure an event monitored by a terminal;
the sender 302 is configured to send subscription information related to the monitored event to an MTC-IWF entity, so that the MTC-IWF entity sends the subscription information to an HLR or an HSS; and
the receiver 303 is configured to receive a Report message sent by the MTC-IWF entity, where the Report message includes indication information of the monitored event or status information of the monitored event or both.

The server is a service capability server SCS or an application server AS.

The server provided in this embodiment can use a corresponding event reporting method described above. For details, refer to related descriptions in embodiments corresponding to FIG. 4, FIG. 5, and FIG. 6 of the event reporting method, and no repeated description is given here.

A person of ordinary skill in the art may understand that units included in the terminal embodiment, the core network management control network element embodiment and the server embodiment are divided merely according to functional logics, but the present invention is not limited to the division, so long as the corresponding functions can be implemented. In addition, a specific name of each functional unit is only intended for differentiation between each other instead of limiting the protection scope of the embodiments of the present invention.

In conclusion, in the embodiments of the present invention, a monitored event and a reporting condition for the event are configured for a terminal, and the terminal monitors the monitored event, thereby reducing a burden of an existing network server. In addition, a status of the monitored event is reported by using a NAS message, or an LAU message or an RAU message or a TAU message, or a short message service message, or the like, so that no bearer connection needs to be created and efficiency of reporting events is effectively improved.

A person skilled in the art may clearly understand that for ease and brevity of description, the foregoing division of functional units is used only as an example. In practical application, the foregoing functions may be undertaken by different functional units as required, that is, the internal structure of an apparatus is divided into different functional units to implement all or a part of the functions described above. For a detailed working process of a system, an apparatus and a unit described above, reference may be made to the corresponding process in the method embodiment described above, and no repeated description is given here.

In several embodiments provided in the embodiments of the present application, it should be understood that the disclosed system, apparatus, and method may be implemented in other manners. For example, the apparatus embodiment is merely exemplary. For example, division of a module or unit is merely division of logical functions, and the module or unit may be divided in other manners in practical implementation. For example, a plurality of units or components may be combined or integrated into another system, or some features may be ignored or omitted in implementation. In addition, mutual couplings, direct couplings, or communication connections that are displayed or discussed herein may be indirect couplings or communication connections that are implemented by means of some interfaces, apparatuses or units, and may be electrical, mechanical, or in other forms.

Units described as separate parts may or may not be physically separate, and parts displayed as units may or may not be physical units, may be located in one location or distributed on a plurality of network units. A part or all of the units may be selected according to actual needs to achieve the objectives of the solutions of the embodiments.

In addition, functional units in each embodiment of the present invention may be integrated in one processing unit, or each of the units may exist alone physically, or two or more of the units are integrated in one unit. The integrated unit may be implemented in the form of hardware or implemented in the form of a software functional unit.

When the integrated unit is implemented in the form of a software functional unit and sold or used as an independent product, the unit may be stored in a computer-readable storage medium. Based on such an understanding, the essence of a technical solution according to an embodiment of the present invention, or the part making contributions to the prior art, or all or a part of the technical solution, may be reflected in the form of a software product. The computer software product is stored in a storage medium, and includes several instructions that instruct a computer device (which may be a personal computer, a server, a network device, or the like) or a processor (processor) to implement all or a part of the steps of the method in each embodiment of the present invention. The storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention instead of limiting the present invention. Although the present invention is described in detail with reference to the foregoing embodiments, a person of ordinary skill in the art should understand that modifications may still be made to the technical solutions described in the foregoing embodiments or equivalent replacements may be made to some technical features thereof, and such modifications or replacements shall in no way make the essence of the corresponding technical solutions depart from the scope of the technical solutions of each embodiment of the present invention.

## Claims

1. A machine type communications, MTC, event reporting method at a terminal (1), wherein the method comprises:
configuring, for the terminal (1), a reporting condition for a monitored MTC event,
reporting (S201), by the terminal (1), information about a monitored MTC event meeting the reporting condition to a core network management control network element (2), so that the core network management control network element (2) reports the information to a server (3), wherein
the information about the MTC event comprises indication information of the monitored MTC event or status information of the monitored MTC event or both;
**characterized in that**
the monitored MTC event is monitoring on the amount of electricity of the terminal (1) and
the reporting (S201), by the terminal (1), information about a monitored MTC event to a core network management control network element (2) specifically comprises:
reporting, by the terminal (1), the information about the monitored MTC event to the core network management control network element (2) by sending a non-access stratum, NAS, message, wherein the NAS message comprises the information about the MTC event; or
reporting, by the terminal (1), the information, about the monitored MTC event to the core network management control network element (2) by sending a location area update, LAU, message, a routing area update, RAU, message, or a tracking area update, TAU, message, wherein the LAU message, the RAU message or the TAU message comprises the information, about the MTC event.

2. The method according to claim 1, wherein the reporting condition comprises triggering a reporting threshold value of the MTC event or reaching a reporting period of the MTC event.

3. The method according to claim 1, wherein the reporting, by a terminal (1), information about a monitored MTC event to a core network management control network element (2), so that the core network management control network element (2) reports the information, to a server (3), specifically comprises:
reporting, by the terminal (1), the information about the monitored MTC event to the core network management control network clement (2), so that the core network management control network element (2) reports the information to the server (3) by using a. short message service-service center, SMS-SC (6).

4. A machine type communications, MTC, event reporting method at a core network management control network element (2), wherein the method comprises:
receiving (S301), by the core network management control network element (2), information about a monitored MTC event meeting a reporting condition, wherein the information is reported by a terminal (1) that has a configured reporting condition for a monitored MTC event; and
reporting (S302), by the core network management control network element (2), the information about the MTC event to a server (3), wherein
the information about the event comprises indication information of the monitored event or status information of the monitored event or both;
**characterized in that**
the monitored MTC event is monitoring on the amount of electricity of the terminal (1) and
the receiving information about a monitored MTC event, wherein the information is reported by a terminal, comprises:
receiving, by the core network management control network element (2), the information about the monitored MTC event, wherein the information is reported by the terminal (1) by sending a non-access stratum, NAS, message, the NAS message comprises the information about the MTC event; or receiving, by the core network management control network element (2), the information about the monitored MTC event, wherein the information is reported by the terminal (1) by sending a location area update, LAU, message, a routing area update, RAU, message, or a tracking area update, TAU, message, wherein the LAU message, the RAU message or the TAU message comprises the information about the MTC event.

5. The method according to claim 4, wherein before the step of reporting, by the core network management control network element (2), the information about the MTC event to a server (3), the method further comprises:
receiving subscription information sent by a home location register, HLR (5), or a home subscriber server, HSS (5);
determining whether the received NAS message, LAU message, RAU message, or TAU message comprises the information about the monitored MTC event, and, if the received message comprises the information about the monitored MTC event, determining whether the subscription information comprises monitoring indication information or monitoring feature information or both, and, if the subscription information comprises the monitoring indication information or the monitoring feature information or both, determining that the terminal (1) has reporting permission; and
the reporting the information about the MTC event to a. server (3) specifically comprises:
reporting the information about the MTC event to the server (3) when it is determined that the terminal (1) has the reporting permission.

6. A terminal device (1), wherein the terminal device (1) comprises:
a configuring unit (12), configured to configure a reporting condition for a monitored MTC event,
a reporting unit (11), configured to report information about a monitored MTC event meeting a configured reporting condition to a core network management control network element (2), so that the core network management control network element (2) reports the information to a server (3), wherein
the information about the MTC event comprises indication information of the monitored MTC event or status information of the monitored MTC event or both;
**characterized in that**
the monitored MTC event is monitoring on the amount of electricity of the terminal (1) and
the reporting unit (11) is specifically configured to: report the information about the monitored MTC event to the core network management control network element (2) by sending a non-access stratum, NAS, message, so that the core network management control network element reports the information to the server, wherein the NAS message comprises the information about the MTC event; or report the information about the monitored MTC event to the core network management control network element by sending a location area update, LAU, message, a routing area update, RAU, message, or a tracking area update, TAU, message, so that the core network management control network element reports the information to the server, wherein the LAU message, the RAU message or the TAU message comprises the information about the MTC event.

7. A core network management control network element (2), wherein the core network management control network clement (2) comprises:
an information receiving unit (21), configured to receive information about a monitored MTC event meeting a reporting condition, wherein the information is reported by a terminal (1) that has a configured reporting condition for a monitored MTC event; and
an information reporting unit (22), configured to report the information about the MTC event to a server (3), wherein the information is received by the information receiving unit (21), wherein
the information about the MTC event comprises indication information of the monitored MTC event or status information of the monitored MTC event or both;
**characterized in that**
the monitored MTC event is monitoring on the amount of electricity of the terminal (1) and
the information receiving unit (21) is specifically configured to receive the information about the monitored MTC event, the information is reported by the terminal (1) by sending a non-access stratum, NAS, message, the NAS message comprises the information about the MTC event; or receive the information about the monitored MTC event, wherein the information is reported by the terminal by sending a location area update, LAU, message, a routing area update, RAU, message, or a tracking area update, TAU, message, wherein the LAU message, the RAU message or the TAU message comprises the information about the MTC event.

## Patentansprüche

1. Maschinentypkommunikations(MTC)-Ereignismeldeverfahren an einem Endgerät (1), wobei das Verfahren Folgendes umfasst:
Auslegen für das Endgerät (1) einer Meldebedingung für ein überwachtes MTC-Ereignis,
Melden (S201) durch das Endgerät (1) von Informationen zu einem überwachten MTC-Ereignis, das die Meldebedingung erfüllt, bei einem Kernnetzwerkverwaltungssteuernetzwerkelement (2), derart, dass das Kernnetzwerkverwaltungssteuernetzwerkelement (2) die Informationen einem Server (3) meldet, wobei
die Informationen zum MTC-Ereignis Anzeigeinformationen zum überwachten MTC-Ereignis oder Statusinformationen zum überwachten MTC-Ereignis oder beide umfassen;
**dadurch gekennzeichnet, dass**
das überwachte MTC-Ereignis das Überwachen der Menge Elektrizität des Endgeräts (1) ist und
das Melden (S201) durch das Endgerät (1) der Informationen zum überwachten MTC-Ereignis beim Kernnetzwerkverwaltungssteuernetzwerkelement (2) speziell Folgendes umfasst:
Melden durch das Endgerät (1) der Informationen zum überwachten MTC-Ereignis beim Kernnetzwerkverwaltungssteuernetzwerkelement (2) durch Senden einer Nichtzugriffsschicht(NAS)-Nachricht, wobei die NAS-Nachricht die Informationen zum MTC-Ereignis umfasst; oder
Melden durch das Endgerät (1) der Informationen zum überwachten MTC-Ereignis beim Kernnetzwerkverwaltungssteuernetzwerkelement (2) durch Senden einer Standortbereichsaktualisierungs(LAU)-Nachricht, einer Routingbereichsaktualisierungs(RAU)-Nachricht oder einer Verfolgungsbereichsaktualisierungs(TAU)-Nachricht, wobei die LAU-Nachricht, die RAU-Nachricht oder die TAU-Nachricht die Informationen zum MTC-Ereignis umfasst.

2. Verfahren nach Anspruch 1, wobei die Meldebedingung das Auslösen eines Meldeschwellwerts des MTC-Ereignisses oder das Erreichen einer Meldeperiode des MTC-Ereignisses umfasst.

3. Verfahren nach Anspruch 1, wobei das Melden durch ein Endgerät (1) von Informationen über ein überwachtes MTC-Ereignis bei einem Kemnetzwerkverwaltungssteuemetzwerkelement (2), derart, dass das Kemnetzwerkverwaltungssteuemetzwerkelement (2) die Informationen einem Server (3) meldet, speziell Folgendes umfasst:
Melden durch das Endgerät (1) der Informationen zum überwachten MTC-Ereignis beim Kernnetzwerkverwaltungssteuernetzwerkelement (2), derart, dass das Kemnetzwerkverwaltungssteuemetzwerkelement (2) die Informationen unter Verwendung eines Kurznachrichtendienstdienstzentrums, SMS-SC (6), dem Server (3) meldet.

4. Maschinentypkommunikations(MTC)-Ereignismeldeverfahren an einem Kernnetzwerkverwaltungssteuernetzwerkelement (2), wobei das Verfahren Folgendes umfasst:
Empfangen (S301) durch das Kernnetzwerkverwaltungssteuernetzwerkelement (2) von Informationen zu einem überwachten MTC-Ereignis, das eine Meldebedingung erfüllt, wobei die Informationen von einem Endgerät (1) gemeldet werden, das eine ausgelegte Meldebedingung für ein überwachtes MTC-Ereignis aufweist; und
Empfangen (S302) durch das Kernnetzwerkverwaltungssteuernetzwerkelement (2) der Informationen zum MTC-Ereignis bei einem Server (3), wobei die Informationen zum Ereignis Anzeigeinformationen zum überwachten Ereignis oder Statusinformationen zum überwachten Ereignis oder beide umfassen;
**dadurch gekennzeichnet, dass**
das überwachte MTC-Ereignis das Überwachen der Menge Elektrizität des Endgeräts (1) ist und
das Empfangen von Informationen zu einem überwachten MTC-Ereignis, wobei die Informationen von einem Endgerät gemeldet werden, Folgendes umfasst:
Empfangen durch das Kernnetzwerkverwaltungssteuernetzwerkelement (2) der Informationen zum überwachten MTC-Ereignis, wobei die Informationen vom Endgerät (1) durch Senden einer Nichtzugriffsschicht(NAS)-Nachricht gemeldet werden, die NAS-Nachricht die Informationen zum MTC-Ereignis umfasst; oder
Empfangen durch das Kernnetzwerkverwaltungssteuernetzwerkelement (2) der Informationen zum überwachten MTC-Ereignis, wobei die Informationen vom Endgerät (1) durch Senden einer Standortbereichsaktualisierungs(LAU)-Nachricht, einer Routingbereichsaktualisierungs(RAU)-Nachricht oder einer Verfolgungsbereichsaktualisierungs(TAU)-Nachricht gemeldet werden, wobei die LAU-Nachricht, die RAU-Nachricht oder die TAU-Nachricht die Informationen zum MTC-Ereignis umfasst.

5. Verfahren nach Anspruch 4, wobei vor dem Schritt des Meldens durch das Kernnetzwerkverwaltungssteuernetzwerkelement (2) der Informationen zum MTC-Ereignis bei einem Server (3) das Verfahren ferner Folgendes umfasst:
Empfangen von Subskriptionsinformationen, die von einem Heimatstandortregister, HLR (5), oder einem Heimteilnehmerserver, HSS (5) gesendet werden;
Bestimmen, ob die empfangene NAS-Nachricht, LAU-Nachricht, RAU-Nachricht oder TAU-Nachricht die Informationen zum überwachten MTC-Ereignis umfasst, und, wenn die empfangene Nachricht die Informationen zum überwachten MTC-Ereignis umfasst, Bestimmen, ob die Subskriptionsinformationen Überwachungsanzeigeinformationen oder Überwachungsmerkmalsinformationen oder beide umfassen, und, wenn die Subskriptionsinformationen die Überwachungsanzeigeinformationen oder die Überwachungsmerkmalsinformationen oder beide umfassen, Bestimmen, dass das Endgerät (1) über eine Meldeerlaubnis verfügt; und
wobei das Melden der Informationen zum MTC-Ereignis bei einem Server (3) speziell Folgendes umfasst:
Melden der Informationen zum MTC-Ereignis beim Server (3), wenn bestimmt wird, dass das Endgerät (1) über die Meldeerlaubnis verfügt.

6. Endgerätevorrichtung (1), wobei die Endgerätevorrichtung (1) Folgendes umfasst:
eine Auslegungseinheit (12), die dazu ausgelegt ist, eine Meldebedingung für ein überwachtes MTC-Ereignis auszulegen,
eine Meldeeinheit (11), die dazu ausgelegt ist, Informationen zu einem überwachten MTC-Ereignis, das die ausgelegte Meldebedingung erfüllt, einem Kernnetzwerkverwaltungssteuernetzwerkelement (2) zu melden, derart, dass das Kernnetzwerkverwaltungssteuernetzwerkelement (2) die Informationen einem Server (3) meldet, wobei
die Informationen zum MTC-Ereignis Anzeigeinformationen zum überwachten MTC-Ereignis oder Statusinformationen zum überwachten MTC-Ereignis oder beide umfassen;
**dadurch gekennzeichnet, dass**
das überwachte MTC-Ereignis das Überwachen der Menge Elektrizität des Endgeräts (1) ist und
die Meldeeinheit (11) speziell zu Folgendem ausgelegt ist: Melden der Informationen zum überwachten MTC-Ereignis beim Kernnetzwerkverwaltungssteuernetzwerkelement (2) durch Senden einer Nichtzugriffsschicht(NAS)-Nachricht, derart, dass das Kernnetzwerkverwaltungssteuernetzwerkelement die Informationen beim Server meldet, wobei die NAS-Nachricht die Informationen zum MTC-Ereignis umfasst; oder Melden der Informationen zum überwachten MTC-Ereignis beim Kernnetzwerkverwaltungssteuernetzwerkelement durch Senden einer Standortbereichsaktualisierungs(LAU)-Nachricht, einer Routingbereichsaktualisierungs(RAU)-Nachricht oder einer Verfolgungsbereichsaktualisierungs(TAU)-Nachricht derart, dass das Kernnetzwerkverwaltungssteuernetzwerkelement die Informationen beim Server meldet, wobei die LAU-Nachricht, die RAU-Nachricht oder die TAU-Nachricht die Informationen zum MTC-Ereignis umfasst.

7. Kernnetzwerkverwaltungssteuernetzwerkelement (2), wobei das Kernnetzwerkverwaltungssteuernetzwerkelement (2) Folgendes umfasst:
eine Informationsempfangseinheit (21), die dazu ausgelegt ist, Informationen zu einem überwachten MTC-Ereignis, das eine Meldebedingung erfüllt, zu empfangen, wobei die Informationen von einem Endgerät (1) gemeldet werden, das eine ausgelegte Meldebedingung für ein überwachtes MTC-Ereignis aufweist; und
eine Informationsmeldeeinheit (22), die dazu ausgelegt ist, die Informationen zum MTC-Ereignis einem Server (3) zu melden, wobei die Informationen von der Informationsempfangseinheit (21) empfangen werden, wobei
die Informationen zum MTC-Ereignis Anzeigeinformationen zum überwachten MTC-Ereignis oder Statusinformationen zum überwachten MTC-Ereignis oder beide umfassen;
**dadurch gekennzeichnet, dass**
das überwachte MTC-Ereignis das Überwachen der Menge Elektrizität des Endgeräts (1) ist und
die Informationsempfangseinheit (21) speziell dazu ausgelegt ist, die Informationen zum überwachten MTC-Ereignis zu empfangen, die Informationen vom Endgerät (1) durch Senden einer Nichtzugriffsschicht(NAS)-Nachricht gemeldet werden, die NAS-Nachricht die Informationen zum MTC-Ereignis umfasst; oder die Informationen zum überwachten MTC-Ereignis zu empfangen, wobei die Informationen vom Endgerät durch Senden einer Standortbereichsaktualisierungs(LAU)-Nachricht, einer Routingbereichsaktualisierungs(RAU)-Nachricht oder einer Verfolgungsbereichsaktualisierungs(TAU)-Nachricht gemeldet werden, wobei die LAU-Nachricht, die RAU-Nachricht oder die TAU-Nachricht die Informationen zum MTC-Ereignis umfasst.

## Revendications

1. Procédé de rapport d'événement de communications de type machine, MTC, dans un terminal (1), dans lequel le procédé comprend :
la configuration, pour le terminal (1), d'une condition de rapport pour un événement de MTC surveillé,
le rapport (S201), par le terminal (1), d'informations concernant un événement de MTC surveillé, satisfaisant à la condition de rapport, à un élément de réseau de commande de gestion de réseau d'infrastructure (2), de telle sorte que l'élément de réseau de commande de gestion de réseau d'infrastructure (2) rapporte les informations à un serveur (3), dans lequel les informations concernant l'événement de MTC comprennent des informations d'indication de l'événement de MTC surveillé ou des informations de statut de l'événement de MTC surveillé ou les deux ;
**caractérisé en ce que**
l'événement de MTC surveillé est la surveillance de la quantité d'électricité du terminal (1), et
le rapport (S201), par le terminal (1), d'informations concernant un événement de MTC surveillé à un élément de réseau de commande de gestion de réseau d'infrastructure (2) comprend spécifiquement :
le rapport, par le terminal (1), des informations concernant l'événement de MTC surveillé à l'élément de réseau de commande de gestion de réseau d'infrastructure (2) en envoyant un message de strate de non-accès, NAS, dans lequel le message de NAS comprend les informations concernant l'événement de MTC ; ou
le rapport, par le terminal (1), des informations concernant l'événement de MTC surveillé à l'élément de réseau de commande de gestion de réseau d'infrastructure (2) en envoyant un message de mise à jour de zone de localisation, LAU, un message de mise à jour de zone de routage, RAU, ou un message de mise à jour de zone de suivi, TAU, dans lequel le message de LAU, le message de RAU ou le message de TAU comprend les informations concernant l'événement de MTC.

2. Procédé selon la revendication 1, dans lequel la condition de rapport comprend le déclenchement d'une valeur de seuil de rapport de l'événement de MTC ou l'atteinte d'une période de rapport de l'événement de MTC

3. Procédé selon la revendication 1, dans lequel le rapport, par un terminal (1), d'informations concernant un événement de MTC surveillé à un élément de réseau de commande de gestion de réseau d'infrastructure (2), de telle sorte que l'élément de réseau de commande de gestion de réseau d'infrastructure (2) rapporte les informations à un serveur (3), comprend spécifiquement :
le rapport, par le terminal (1), des informations concernant l'événement de MTC surveillé à l'élément de réseau de commande de gestion de réseau d'infrastructure (2), de telle sorte que l'élément de réseau de commande de gestion de réseau d'infrastructure (2) rapporte les informations au serveur (3) en utilisant un centre de service de service de messages SMS, SMS-SC (6).

4. Procédé de rapport d'événement de communications de type machine, MTC, au niveau d'un élément de réseau de commande de gestion de réseau d'infrastructure (2), dans lequel le procédé comprend :
la réception (S301), par l'élément de réseau de commande de gestion de réseau d'infrastructure (2), d'informations concernant un événement de MTC surveillé satisfaisant à une condition de rapport, dans lequel les informations sont rapportées par un terminal (1) qui a une condition de rapport configurée pour un événement de MTC surveillé ; et
le rapport (S302), par l'élément de réseau de commande de gestion de réseau d'infrastructure (2), des informations concernant l'événement de MTC, à un serveur (3), dans lequel
les informations concernant l'événement comprennent des informations d'indication de l'événement surveillé ou des informations de statut de l'événement surveillé ou les deux ;
**caractérisé en ce que**
l'événement de MTC surveillé est la surveillance de la quantité d'électricité du terminal (1), et
la réception d'informations concernant un événement de MTC surveillé, dans lequel les informations sont rapportées par un terminal, comprend :
la réception, par l'élément de réseau de commande de gestion de réseau d'infrastructure (2), des informations concernant l'événement de MTC surveillé, dans lequel les informations sont rapportées par le terminal (1) en envoyant un message de strate de non-accès, NAS, le message de NAS comprend les informations concernant l'événement de MTC ; ou la réception, par l'élément de réseau de commande de gestion de réseau d'infrastructure (2), des informations concernant l'événement de MTC surveillé, dans lequel les informations sont rapportées par le terminal (1) en envoyant un message de mise à jour de zone de localisation, LAU, un message de mise à jour de zone de routage, RAU, ou un message de mise à jour de zone de suivi, TAU, dans lequel le message de LAU, le message de RAU ou le message de TAU comprend les informations concernant l'événement de MTC.

5. Procédé selon la revendication 4, dans lequel, avant l'étape du rapport, par l'élément de réseau de commande de gestion de réseau d'infrastructure (2), des informations concernant l'événement de MTC, à un serveur (3), le procédé comprend en outre :
la réception d'informations d'abonnement envoyées par un registre de localisation domestique, HLR (5), ou un serveur d'abonné domestique, HSS (5) ;
la détermination de savoir si le message de NAS, le message de LAU, le message de RAU, ou le message de TAU reçu comprend, ou non, les informations concernant l'événement de MTC surveillé, et, si le message reçu comprend les informations concernant l'événement de MTC surveillé, la détermination de savoir si les informations d'abonnement comprennent, ou non, des informations d'indication de surveillance ou des informations de caractéristique de surveillance ou les deux, et, si les informations d'abonnement comprennent les informations d'indication de surveillance ou les informations de caractéristique de surveillance ou les deux, la détermination que le terminal (1) a une permission de rapport ; et
le rapport des informations concernant l'événement de MTC à un serveur (3) comprend spécifiquement :
le rapport des informations concernant l'événement de MTC au serveur (3) lorsqu'il est déterminé que le terminal (1) a la permission de rapport.

6. Dispositif terminal (1), dans lequel le dispositif terminal (1) comprend :
une unité de configuration (12), configurée pour configurer une condition de rapport pour un événement de MTC surveillé,
une unité de rapport (11), configurée pour rapporter des informations concernant un événement de MTC surveillé, satisfaisant à une condition de rapport configurée, à un élément de réseau de commande de gestion de réseau d'infrastructure (2), de telle sorte que l'élément de réseau de commande de gestion de réseau d'infrastructure (2) rapporte les informations à un serveur (3), dans lequel
les informations concernant l'événement de MTC comprennent des informations d'indication de l'événement de MTC surveillé ou des informations de statut de l'événement de MTC surveillé ou les deux ;
**caractérisé en ce que**
l'événement de MTC surveillé est la surveillance de la quantité d'électricité du terminal (1), et
l'unité de rapport (11) est spécifiquement configurée pour : rapporter les informations concernant l'événement de MTC surveillé à l'élément de réseau de commande de gestion de réseau d'infrastructure (2) en envoyant un message de strate de non-accès, NAS, de telle sorte que l'élément de réseau de commande de gestion de réseau d'infrastructure rapporte les informations au serveur, dans lequel le message de NAS comprend les informations concernant l'événement de MTC ; ou rapporter les informations concernant l'événement de MTC surveillé à l'élément de réseau de commande de gestion de réseau d'infrastructure en envoyant un message de mise à jour de zone de localisation, LAU, un message de mise à jour de zone de routage, RAU, ou un message de mise à jour de zone de suivi, TAU, de telle sorte que l'élément de réseau de commande de gestion de réseau d'infrastructure rapporte les informations au serveur, dans lequel le message de LAU, le message de RAU ou le message de TAU comprend les informations concernant l'événement de MTC.

7. Élément de réseau de commande de gestion de réseau d'infrastructure (2), dans lequel l'élément de réseau de commande de gestion de réseau d'infrastructure (2) comprend :
une unité de réception d'informations (21), configurée pour recevoir des informations concernant un événement de MTC surveillé satisfaisant à une condition de rapport, dans lequel les informations sont rapportées par un terminal (1) qui a une condition de rapport configurée pour un événement de MTC surveillé ; et
une unité de rapport d'informations (22), configurée pour rapporter les informations concernant l'événement de MTC à un serveur (3), dans lequel les informations sont reçues par l'unité de réception d'informations (21), dans lequel
les informations concernant l'événement de MTC comprennent des informations d'indication de l'événement de MTC surveillé ou des informations de statut de l'événement de MTC surveillé ou les deux ;
**caractérisé en ce que**
l'événement de MTC surveillé est la surveillance de la quantité d'électricité du terminal (1), et
l'unité de réception d'informations (21) est spécifiquement configurée pour recevoir les informations concernant l'événement de MTC surveillé, les informations sont rapportées par le terminal (1) en envoyant un message de strate de non-accès, NAS, le message de NAS comprend les informations concernant l'événement de MTC ; ou recevoir les informations concernant l'événement de MTC surveillé, dans lequel les informations sont rapportées par le terminal en envoyant un message de mise à jour de zone de localisation, LAU, un message de mise à jour de zone de routage, RAU, ou un message de mise à jour de zone de suivi, TAU, dans lequel le message de LAU, le message de RAU ou le message de TAU comprend les informations concernant l'événement de MTC.
